## Europäisches Patentamt
## European Patent Office
## Office européen des brevets

(19)

(11) Publication number: **0 008 690**
**B1**

(12)

# EUROPEAN PATENT SPECIFICATION

(45) Date of publication of patent specification: **28.07.82**

(51) Int. Cl.³: **G 11 B 17/02**

(21) Application number: **79102843.4**

(22) Date of filing: **07.08.79**

(54) Flexible disk pack assembly.

(30) Priority: **01.09.78 US 939155**

(43) Date of publication of application:
**19.03.80 Bulletin 80/6**

(45) Publication of the grant of the patent:
**28.07.82 Bulletin 82/30**

(84) Designated Contracting States:
**DE FR GB**

(56) References cited:
**FR - A - 2 277 403**
**FR - A - 2 335 016**
**US - A - 3 130 393**

(73) Proprietor: **International Business Machines Corporation**
**Armonk, N.Y. 10504 (US)**

(72) Inventor: **Janssen, Donovan Milo**
**4750 Lee Circle**
**Boulder, CO 80303 (US)**
Inventor: **Radman, Jr., Anton Joseph**
**8050 N. Della Robia Place**
**Tucson, AZ 85703 (US)**

(74) Representative: **Lancaster, James Donald**
**IBM United Kingdom Patent Operations Hursley Park**
**Winchester Hants SO21 2JN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Flexible disk pack assembly

This invention relates to a disk pack assembly having a plurality of flexible disks mounted on a rotary drive shaft, as set out in the introductory part of claim 1.

U.S. Patent 3.936.880 discloses a flexible disk pack drive in which a disk pack assembly has a multiplicity of flexible disks separated by axial spacers. Off-axis longitudinal bores extend through the disk pack and allow a flow of air through the disk pack assembly. The flow rate and pressure possibilities allow the pack to be operated under three general states relative to accessing of the disks by a transducer, an above-bistable or stable access state, a bistable access state, and an unstable or below bistable access state. In the above-bistable or stable access state, portions of the edges of adjacent disks can be longitudinally separated to create a partial split, by means of some external force or disturbance. When the external force or disturbance is removed while in the stable access state, the partial split closes. In the bistable access state, an external force or disturbance is used to cause an access opening to be created between preselected disks so that a read/write head can be inserted for accessing a disk. When the external force is removed in the bistable access state, the access opening is maintained or sustained until the access state is changed from the bistable to the stable. The access opening can be created by initially creating a partial split while operating in the stable access state and then switching the flow conditions to the bistable access state whereupon the partial split opens up into a full split or access opening. In the unstable or below bistable access state, the flow rate is greatly reduced so as to create a relatively high vacuum on the interior of the disk pack assembly. Under such conditions, multiple splits can spontaneously occur along the disk pack. The above U.S. patent indicates the possibility of using a high vacuum condition to effect a rapid opening of the access opening.

U.S. Patent 4,051,541 discloses a self-ventilated disk pack drive assembly having an external selection and actuation apparatus in which the partial split is used in conjunction with edge coding marks and a reader to select the disk next to which an access opening is to be created. Upon reaching the desired disk, the disk pack is switched from the stable to the bistable access state creating an access opening.

An object of the invention is to provide a flow controller which automatically switches the operating condition between a first relatively high vacuum condition for rapidly creating an access opening between preselected disks and a relatively lower vacuum in the bistable access for sustaining the access opening.

This object is achieved by providing a disk pack assembly with the features characterised in claim 1.

In the accompanying drawings:

Fig. 1 is a perspective view of a flexible disk pack assembly according to the invention;

Fig. 2 is an enlarged top plan view, with portions removed and partly in section, of part of the assembly of Fig. 1;

Fig. 3 is a side view, partly in section, of Fig. 2;

Fig. 4 is a cross sectional view taken along line 4—4 of Fig. 3, and with portions removed;

Fig. 5 is an illustrative diagram used in indicating operation of the assembly of Fig. 1; and

Fig. 6 shows two graphs relating to operation of the assembly of Fig. 1.

Assembly 10 includes a stack 12 of flexible disks mounted on a rotary shaft 16 driven by a motor 14. A disk selection and transducing mechanism 18 is shown with a transducing head 20 extended into an access opening of stack 12. The head can be moved radially relative to the stack to select a desired radial recording track. When the head 20 is withdrawn, mechanism 18 is movable along a guide 22, to enable it to move to different positions relative to the stack. Surrounding the central part of one end of stack 12 is a plenum chamber 24, which communicates with the atmosphere through a flow controller 26 and a filter 28.

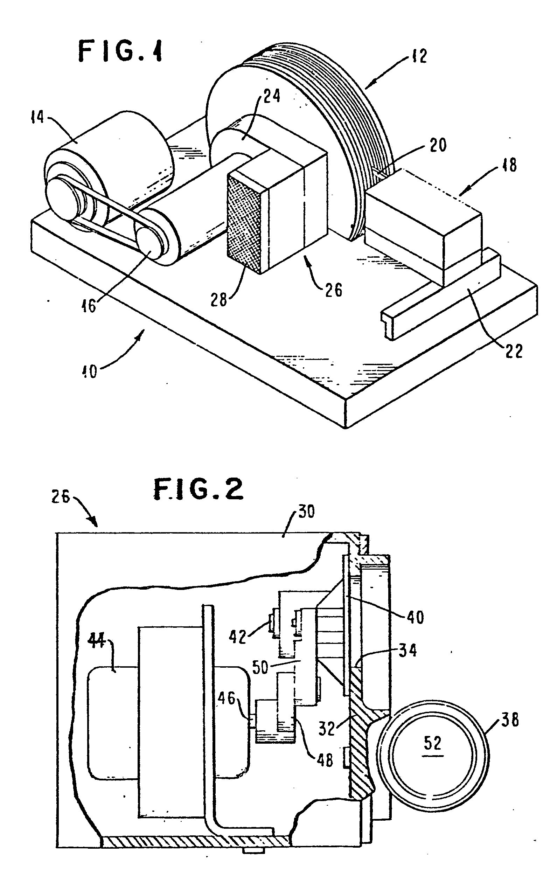

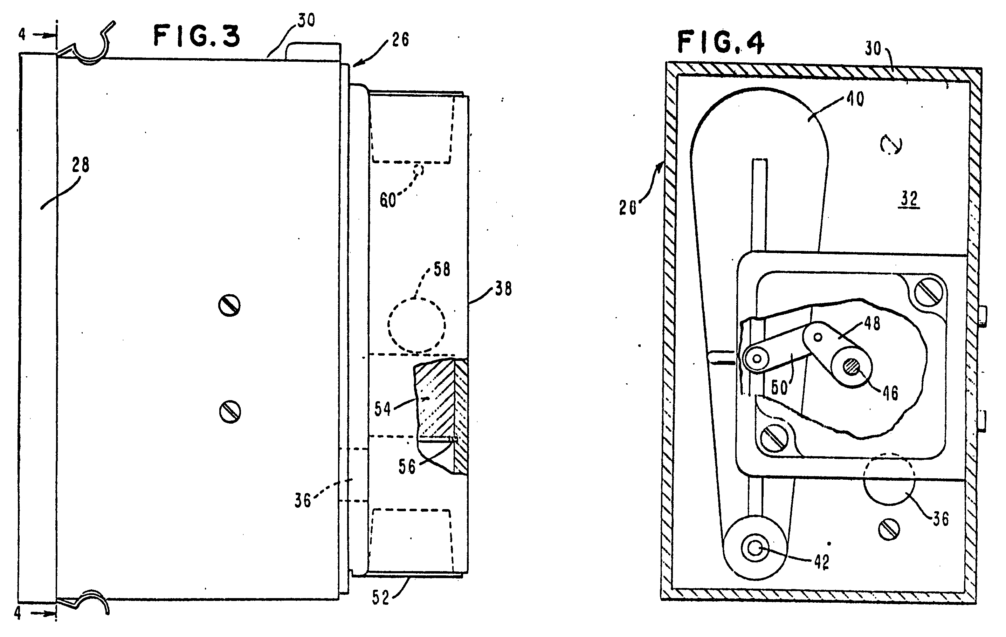

With reference to Figs. 2—4, controller 26 has a box-like housing 30 having an entrance covered by the filter 28 (Fig. 3), which reduces the flow of air-born particles into the assembly 10. Housing 30 includes an end wall 32 which adjoins the plenum chamber 24. Wall 32 has a first opening 34 therein that defines a primary flow passage for air to flow from housing 30 into plenum chamber 24. Wall 32 also has a second opening 36 (Figs. 3 and 4) defining a secondary flow passage that leads from housing 30 to the interior of a cylinder 38 mounted on the wall 32. With flow controller 26 connected to the plenum chamber as shown in Fig. 1, cylinder 38 lies wholly within the plenum chamber 24.

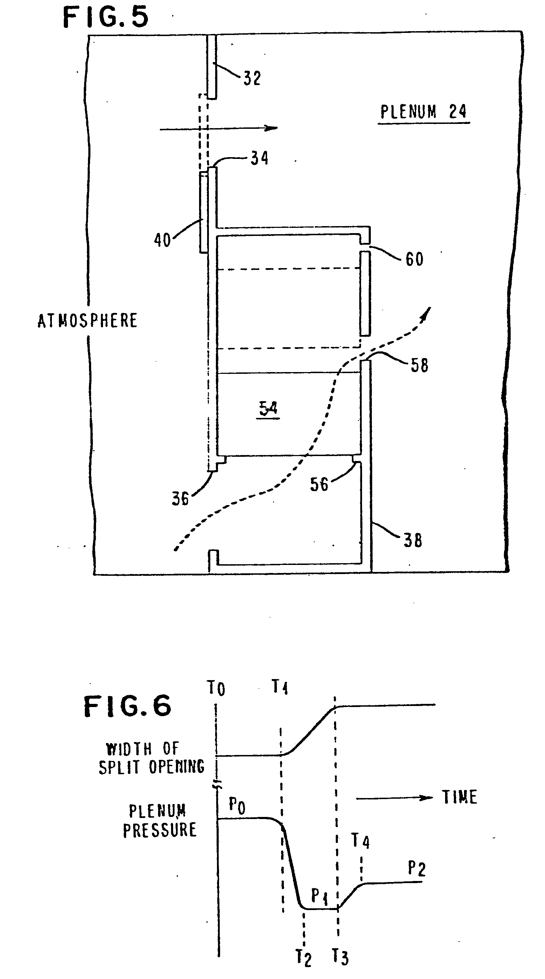

A pivotable valve member 40 is mounted inside housing 30 on wall 32 for angular rotation about a shaft 42 between a closed position shown in Figs. 2 and 4 and an open position shown purely diagrammatically in Fig. 5. It will be appreciated that Fig. 5 is not an accurate representation of the arrangement shown in Fig. 2—4. When valve member 40 is in the closed position, it cooperates with wall 32 to block or prevent the flow of air through passage 34. When member 40 is in the open position, air freely flows through passage 34, the sizes of valve member 40 and of passage 34 being large enough to allow a high rate of flow of air through the controller, with a minimum pressure drop, so that the pressure within the plenum chamber is substantially atmospheric as appropriate for the stable access state of the assembly 10. Valve member 40 is moved between positions in response to the selective energization of a motor 44 having an output shaft 46 (Figs. 2 and 4) carrying a crank 48. A link 50 connects crank 48 to valve member 40. When valve member 40 is closed and motor 44 is energized, the output shaft 46 thereof will rotate in a clockwise direction as viewed in Fig. 4 to rotate crank 48 clockwise. This motion will be transmitted to link 50, which pivots valve member 40 to slide along wall 32 from its closed position to its open position. By reversing the direction of operation of motor 44, the valve member 40 is moved from the open position to the closed position.

Cylinder 38 extends vertically and is closed by end caps 52. A cylindrical piston valve member 54 is slidable inside cylinder 38 and, as shown in Fig. 3, rests under gravity on a stop ring 56. Aperture 36 extends through end wall 32 and through the adjacent part of side wall of cylinder 38 to communicate with the space beneath member 54. Aperture 36 forms an entrance port allowing gas to flow into the interior of cylinder 38. An exhaust port 58 is located in the middle of cylinder 38 above the bottom position of member 54 and extends between the interior of cylinder 38 and the plenum chamber 24. A bleed orifice 60 extends between the interior of cylinder 38 and the plenum chamber 24 near the top of the cylinder.

Referring now to Fig. 5, which, as already indicated, is only illustrative, during operation of the assembly, valve member 40 is moved to the open position, shown in full lines in Fig. 5, wherein a primary flow of air through passage 34 is at a flow rate and pressure to create a stable access state of the assembly. Thus, mechanism 18 can be operated to move head 20 to a position adjacent a predetermined disk and create a partial split between it and an adjacent disk. When valve member 40 is moved from the open position to the closed position, shown by the dotted line, in which it cooperates with end wall 32 to prevent the flow of air through passage 34, a centrifugal pumping action due to rotation of the disk stack causes the pressure in plenum chamber 24 to drop so as to create a relatively high vacuum. As the pressure in plenum 24 drops, the pressure in cylinder 38 above piston 54 also drops, due to communication through port 58 and bleed orifice 60. Since the lower side of piston 54 is exposed to atmospheric pressure through passage 36, a pressure differential exists which creates a force that acts upwardly on the piston 54. When the force is sufficient to overcome the weight of piston 54, the piston moves upwardly. When the top edge of piston 54 passes by the upper edge of port 58, air is almost entrapped in the space above the piston. Bleed orifice 60 allows such air to escape from the cylinder into the plenum chamber 24 at a controlled rate to provide a controlled movement of piston 54 so as to give it a time delay before port 58 is uncovered by the bottom surface of the piston 54, during which time the high vacuum condition is maintained in plenum chamber 24 allowing a full access opening to be created at a partial split. As the bottom surface of piston 54 starts to uncover port 58, air can flow from the atmosphere in housing 30 through passage 36, through the interior of cylinder 38 and through port 58 into plenum chamber 24. The sizes of port 58 and piston 54 are chosen to restrict the flow of air to a flow rate appropriate for the bistable access state of the assembly. Thus, once an access opening has occurred, the bistable state with the higher pressure in plenum chamber 24 than the initial high vaccum condition will sustain or maintain a stable access opening between the preselected disks. It will be appreciated that any subsequent closing of that access opening can be made to occur more rapidly than if the high vacuum were to be maintained, because there is less of a vacuum that must be overcome before the closing can occur.

Referring to Fig. 6, the upper graph represents the width of a disk opening between a preselected disk and an adjacent disk at a peripheral point spaced from a partial split. At time $T_0$, the width of the opening is substantially equal to the width of the axial spacing between adjacent disks. At time $T_1$, when valve member 40 is moved from and open to a closed position, the disk opening begins to enlarge until at time $T_3$ the opening reaches the maximum width. Before time $T_1$, the pressure $P_0$ in the plenum chamber 24 is substantially atmospheric. When valve member 40 closes at time $T_1$, the air pressure drops from $P_0$ to $P_1$ which is at a relatively high vacuum. Pressure $P_1$ is maintained for a time from $T_2$ to $T_3$ at which point the disks move to their maximum opening width. Beyond $T_3$, valve member 54 uncovers port 58 allowing a restricted flow of air into the plenum with the result that the pressure therein increases from $P_1$ to $P_2$ so that at a time $T_4$, the pressure $P_2$ stabilizes at a pressure within the range appropriate for the bistable access state. Thereafter, when it is desired to close the access opening, valve member 40 is moved from its closed position to the open position increasing the flow rate and increasing the pressure within the plenum chamber 24 to $P_0$. The pressure increase removes the pressure differential across piston 54, which due to gravity, slides down until it reaches stop 56.

When valve member 54 is in the dotted position shown in Fig. 5, it throttles the air flow so that there is a substantial pressure drop across passage 58 whereby the lower face of piston is exposed to atmospheric pressure and the upper face is exposed to the pressure within plenum chamber 24 through bleed orifice 60. Any pressure changes within the plenum chamber 24 are thus effective to alter the position of piston 54 so as to regulate the flow of air through port 58.

It should be obvious to those skilled in the art that, instead of using a gravity biased piston 54, a spring bias piston could be substituted. Also other forms of valve member to give a throttled air flow, such as a diaphragm valve, can be used, and further an air driven motor means driven directly or indirectly by the pressure within plenum chamber 24 could be used to physically move the valve member. A feedback control could be used to maintain a constant flow rate or maintain a desired pressure set point condition.

It will be appreciated that the assembly 10 is self-ventilating in the sense that the vacuum conditions created in the plenum chamber are produced by centrifugal action of the disk stack, rather than as the result of connecting an external vacuum source to the plenum chamber.

## Claims

1. Disk pack assembly (10) having a plurality of flexible disks (12) mounted on a rotary drive shaft (16), and a plenum chamber (24) supplying gas which is centrifugally exhausted outwardly between the disks, the plenum chamber having valve means and gas source means (26, 28, 40) for varying the pressure in the plenum chamber between a first pressure $(P_2)$ for a bistable transducer access state of the disks, and a second more negative pressure $(P_1)$ for accelerated disk access transition, characterised in that said valve means and gas source means (26, 28, 40) is operable (via 40) for a disc access operation first to create said second pressure $(P_1)$ in said plenum chamber (24), and said valve means and gas source means include a valve (54) automatically responsive to pressure in the plenum chamber (24) to supply a throttled flow of gas (58) into the plenum chamber just after said second pressure $(P_1)$ has been created, so that said second pressure is automatically increased to said first pressure $(P_2)$ after a period $(T_2—T_3)$ sufficient to allow said accelerated disk access transition.

2. Disk pack assembly as claimed in claim 1 in which said valve (54) is a piston valve slidable in a cylinder (38), one surface of the piston being subject to the pressure of the gas source means (via 36), and the other surface of the piston being subject to the pressure in the plenum chamber (via 60), the cylinder having an opening (58) which is uncovered by the piston to supply said throttled flow of gas after said second pressure $(P_1)$ has been created.

3. Disk pack assembly as claimed in claim 2 in which said plenum chamber communicates with the cylinder (38) via a bleed hole (60) whose size limits rate of movement of the piston as it uncovers said opening (58).

4. Disk pack assembly as claimed in claim 2 or 3 in which said piston is urged by gravity to close said opening (58).

5. Disk pack assembly as claimed in any preceding claim arranged so that said second pressure $(P_1)$ is created by operating a second valve (40) to close a passage (34) between the gas source means (28) and the plenum chamber (24), which passage is in parallel with that containing said valve (54), said passage (34), when open, allowing a pressure $(P_0)$ to result in said plenum chamber for a stable access state of the disks.

## Revendications

1. Ensemble à pile de disques (10) comportant une pluralité de disques flexibles (12) montés sur un axe d'entraînement rotatif (16) et une chambre d'alimentation (24) délivrant du gaz qui est rejeté vers l'extérieur, par action de la force centrifuge, entre les disques, la chambre d'alimentation présentant une valve et une source de gaz (26, 28, 40) pour faire varier la pression dans la chambre d'alimentation entre une première pression $(P_2)$ pour un état bistable des disques lors de l'accès par un transducteur, et une deuxième pression plus négative $(P_1)$ pour une transition d'accès accéléré aux disques, caractérisé en ce que ladite valve et ladite source de gaz (26, 28, 40) peuvent être actionnées (via 40) pour une opération d'accès aux disques tout d'abord pour établir ladite deuxième pression $(P_1)$ dans ladite chambre d'alimentation (24), et lesdites valve et source de gaz comprennent une valve (54) répondant automatiquement à la pression dans la chambre d'alimentation (24) pour assurer un débit de gaz contrôlé (58) dans la chambre d'alimentation juste après que ladite deuxième pression $(P_1)$ ait été établie, de façon que ladite deuxième pression soit automatiquement augmentée à la valeur de ladite première pression $(P_2)$ après une période de temps $(T_2—T_3)$ suffisante pour permettre ladite transition d'accès accéléré aux disques

2. Ensemble à pile de disques selon la revendication 1 dans lequel ladite valve (54) est une valve à piston coulissant dans un cylindre (38), une surface du piston étant soumise à la pression de la source de gaz (via 36) et l'autre surface du piston étant soumise à la pression dans la chambre d'alimentation (via 60), le cylindre comportant une lumière (58) qui est decouverte par le piston pour assurer ledit débit de gaz contrôlé après que ladite deuxième pression $(P_1)$ ait été établie.

3. Ensemble à pile de disques selon la revendication 2 dans lequel ladite chambre d'alimentation communique avec le cylindre (38) par un trou d'écoulement (60) dont les dimensions limitent la vitesse du mouvement du piston lorsqu'il découvre ladite lumière (58).

4. Ensemble à pile de disques selon la revendication 2 ou 3 dans lequel ledit piston est entraîné par gravité pour fermer ladite lumière (58).

5. Ensemble à pile de disques selon l'une quelconque des revendications précédentes, agencé de façon que ladite deuxième pression (P₁) soit établie par l'actionnement d'une deuxième valve (40) pour fermer un passage (34) entre la source de gaz (28) et la chambre d'alimentation (24), lequel passage est parallèle à celui contenant ladite valve (54), ledit passage (34) lorsqu'il est ouvert, permettant l'établissement d'une pression (P₀) dans ladite chambre d'alimentation pour assurer une condition d'accès stable aux disques.

## Patentansprüche

1. Plattenstapelanordnung (10) mit einer Vielzahl flexibler Platten (12), die auf einer drehbaren Antriebswelle (16) montiert sind, und mit einer Kammer (24) für die Zuführung von Gas zentrifugal nach außen zwischen die Platten, wobei die Kammer Ventilmittel und Gasquellenmittel (26, 28, 40) aufweist für die Veränderung des Drucks in der Kammer zwischen einem ersten Druck (P₂) für einen bistabilen Wandler-Zugriffstatus der Platten und einem zweiten etwas negativerem Druck (P₁) für beschleunigten Plattenzugriffs-Übergang, dadurch gekennzeichnet, daß besagte Ventilmittel und Gasquellenmittel (26, 28, 40) für einen Plattenzugriff (über 40) betätigbar sind, um zunächst bestagten zweiten Druck (P₁) in besagter Kammer (24) herzustellen, und daß besagte Ventilmittel und Gasquellenmittel ein Ventil (54) enthalten, das automatisch auf den Druck in der Kammer (24) reagiert, um einen gedrosselten Gasfluß (58) in die Kammer einzuführen gerade nach der Erzeugung besagten zweiten Drucks (P₁), so daß besagter zweiter Druck automatisch auf besagten ersten Druck (P₂) angehoben wird, nachdem eine Zeitspanne (T₂—T₃) verstrichen ist, um besagten beschleunigten Plattenzugriffs-Übergang zu ermöglichen.

2. Plattenstapelgerät gemäß Anspruch 1, bei dem besagtes Ventil (54) ein Kolbenventil verschiebbar in einem Zylinder (38) ist, wobei eine Fläche des Kolbens dem Druck der Gasquellenmittel (über 36) ausgesetzt ist und die andere Fläche des Kolbens dem Druck in der Kammer (über 60) ausgesetzt ist, der Zylinder eine Öffnung (58) aufweist, die durch den Kolben freigelegt wird, um besagten gedrosselten Gasfluß nach Aufbau besagtem zweiten Drucks (P₁) zuzuführen.

3. Plattenstapelgerät gemäß Anspruch 2, bei dem besagte Kammer mit dem Zylinder (38) über eine kleine Öffnung (60) in Verbindung steht, deren Größe den Bewegungsspielraum des Kolbens begrenzt, wenn er besagte Öffnung (58) freigibt.

4. Plattenstapelgerät gemäß Anspruch 2 oder 3, bei dem besagter Kolben durch Schwerkraft zum Schließen besagter Öffnung (58) gedrückt wird.

5. Plattenstapelgerät gemäß einem der vorhergehenden Ansprüche derart, daß besagter zweiter Druck (P₁) durch Betätigung eines zweiten Ventils (40) erzeugt wird, um einen Durchgang (34) zwischen den Gasquellenmitteln (28) und der Kammer (24) zu schließen, wobei der Durchgang parallel zu dem liegt, der das Ventil (54) enthält, wobei besagter Durchgang (34) in geöffnetem Zustand einem Druck (P₀) für einen stabilen Zugriffsstatus der Platten in besagter Kammer einzustellen gestattet.

## FIG.1

## FIG.2

FIG.3

FIG.4

# FIG.5

PLENUM 24

ATMOSPHERE

54

# FIG.6

WIDTH OF
SPLIT OPENING

PLENUM
PRESSURE

TIME